# EUROPEAN PATENT APPLICATION

(11) **EP 1 975 869 A1**
(43) Date of publication of application: **01.10.2008**
(21) Application number: 08006567.5
(22) Date of filing: 31.03.2008
(51) Int. Cl.: G06Q 40/00

(54) **Enhanced fraud detection with terminal transaction-sequence processing**

(30) Priority: 30.03.2007 US 920842 P
(71) Applicant: Fair Isaac Corporation, Minneapolis, MN 55402 (US)
(72) Inventor: Wang, Liang, San Diego, CA 92128 (US); Pratt, Michael M., Cardiff, CA 92007 (US); Taneja, Anuj, San Diego, CA 92126 (US); Zhang, Jenny G., San Diego, CA 92130 (US)
(74) Representative: Rocke, Carsten

(57) **Abstract**

A computer-implemented fraud detection system and method are disclosed. A method includes monitoring past customer account transactions conducted with a selected one or more transaction devices, and generating a predictive model that combines customer account transaction profiles with transaction device profiles related to the one or more transaction devices, and storing a representation of the predictive model in a storage. A system for detecting fraud in financial transaction includes a fraud detection computer that receives, through a communications network, customer account transaction data obtained by a monitoring device of a transaction device according to one or more transaction device variables of a transaction device profile.

## Description

### BACKGROUND

This disclosure relates generally to fraud detection in financial transactions, and more particularly to systems and techniques for improving fraud detection rates and reliability.

Predictive analytics have long been used to extract information, and in particular information about fraud, and to predict and create profiles about particular consumers. This and has been shown to be effective in protecting a large number of financial institutions, both in the United States and worldwide, from payment card fraud. However, conventional profiling techniques strictly limit the application of predictive analytics to transactions, such as payment card transactions when viewed at the customer-account level, which is commonly referred to as "account profiling" which can be used to create one or more "account profiles," or computer-based records describing fraud and non-fraud activity related to a customer or their account. Further, these conventional profiling techniques do not apply predictive analytics to any devices or implements employed in such transactions.

### SUMMARY

In general, this document discusses a system and method for fraud detection that extends predictive analytics technology to profiling devices or implements such as Automated Teller Machines (ATM) and Point of Service (POS) terminals. This extension is called "device profiling" or "terminal profiling," yet is not limited to devices and may include the profiling of locations. For example, all of the ATM terminals at a single location can be treated as a "device," from which one or more models can be developed that learn the behavior for that location, and from which accurate predictions can be produced.

According to one aspect, a computer-implemented fraud detection method includes the steps of monitoring past customer account transactions conducted with a selected one or more transaction devices, and generating a predictive model that combines customer account transaction profiles with transaction device profiles related to the one or more transaction devices. The method further includes the step of storing a representation of the predictive model in a storage.

According to another aspect, a method for detecting fraud in financial transactions includes the steps of receiving, through a communications network, customer account transaction data obtained at a transaction device, and generating predictive fraudulent activity information based on the customer account transaction data obtained at the transaction device according to one or more transaction device profile variables that define a transaction device profile for the transaction device.

According to yet another aspect, a system is presented for detecting fraud in financial transactions. One such system includes a monitor adapted to transmit, through a communications network to a fraud detection computer, customer account transaction data obtained at a transaction terminal according to one or more transaction device variables of a transaction device profile. Another such system includes a fraud detection computer that receives, through a communications network, customer account transaction data obtained by a monitoring device of a transaction device according to one or more transaction device variables of a transaction device profile.

In yet another implementation, a fraud detection system includes a transaction monitor for monitoring a transaction at a transaction device, and for transmitting data associated with the transaction to a communication network. The system further includes a fraud detection computer that receives, through the communications network, the data associated with the transaction, and parses the data for transaction device profile variable data for processing according to a set of transaction device profiles, the fraud detection computer further configured to generate a device fraud score.

The details of one or more embodiments are set forth in the accompanying drawings and the description below. Other features and advantages will be apparent from the description and drawings, and from the claims.

### BRIEF DESCRIPTION OF THE DRAWINGS

These and other aspects will now be described in detail with reference to the following drawings.

FIG. 1 depicts a fraud detection system according to a device model.

FIG. 2 depicts a fraud detection system according to an augmented account model.

FIG. 3 depicts a fraud detection system according to an augmented device model.

FIG. 4 depicts a fraud detection system according to a dual profile model.

FIG. 5 depicts a fraud detection system according to a score fusion model.

FIG. 6 depicts a fraud detection system according to an outlier model.

FIG. 7 is a table illustrating results of a fraud detection and monitoring process.

FIGS. 8A and 8B are star tables illustrating results of another fraud detection and monitoring process.

FIG. 9 is a table of customer account transaction data obtained at a transaction terminal.

FIG. 10 is a table of customer account transaction data obtained at a transaction terminal.

FIG. 11 illustrates performance data for several fraud detection system and methods described herein.

FIG. 12 illustrates a single processing element within a neural network.

FIG. 13 illustrates hidden processing elements in a neural network.

Like reference symbols in the various drawings indicate like elements.

### DETAILED DESCRIPTION

This document describes fraud detection systems, processes and techniques that extend predictive analytics technology to profiling devices or implements such as Automated Teller Machines (ATM) and Point of Service (POS) terminals. This extension is called "device profiling" or "terminal profiling," yet is not limited to devices and may include the profiling of locations. For example, all of the ATM terminals at a single location can be treated as a "device," from which one or more models can be developed that learn the behavior for that location, and from which accurate predictions can be produced.

When used independently, a wide range of transaction variables from device profiling can be used to learn typical, non-fraud activity for individual ATM or POS terminals, and this information can be recorded in specific types of device profiles called "terminal profiles". Certain fraud patterns, which deviate from learned terminal non-fraud activity, can then be singled out. Another, more powerful, approach is to use device profiles such as terminal sequence processing in conjunction with account profiles such customer-account sequence processing to significantly improved fraud detection relative to customer-account sequence processing alone. Device profiling can be used to accumulate information about activity at a device in order to improve fraud detection when a card associated with an account transacts. Another approach is to monitor the device itself and provide an alert when unusual and/or suspicious activity is detected at the device. These and other approaches and implementations are described in further detail below.

In accordance with preferred exemplary implementations, predictive modeling is used to evaluate sequences of transactions originating at ATM or POS terminals to identify possibly fraudulent transactions, either independently or in conjunction with customer-account processing as described in U.S. Patent No. 5,819,226, "Fraud Detection Using Predictive Modeling," incorporated by reference in its entirety herein for all purposes.

Device profiling is used to compare a transaction or set of transactions that use a device with a number of profiling variables that make up a device profile, for processing according to a model or, in some implementations, by a neural network. Neural networks employ a technique of "learning" relationships through repeated exposure to data and adjustment of internal weights. They allow rapid model development and automated data analysis. Essentially, such networks represent a statistical modeling technique that is capable of building models from data containing both linear and non-linear relationships. While neural networks are referenced in the following explanations of various features and aspects of exemplary implementations of the subject matter disclosed herein, it will be understood that other predictive models besides neural networks can be used. The scope of protection sought is delineated by the language of the claims as recited herein.

While similar in concept to regression analysis, neural networks are able to capture nonlinearity and interactions among independent variables without pre-specification. In other words, while traditional regression analysis requires that nonlinearities and interactions be detected and specified manually, neural networks perform these tasks automatically. For a more detailed description of neural networks, see D. E. Rumelhart et al, "Learning Representations by Back-Propagating Errors", Nature v. 323, pp. 533-36 (1986), and R. Hecht-Nielsen, "Theory of the Backpropagation Neural Network", in Neural Networks for Perception, pp. 65-93 (1992), the teachings of which are incorporated herein by reference.

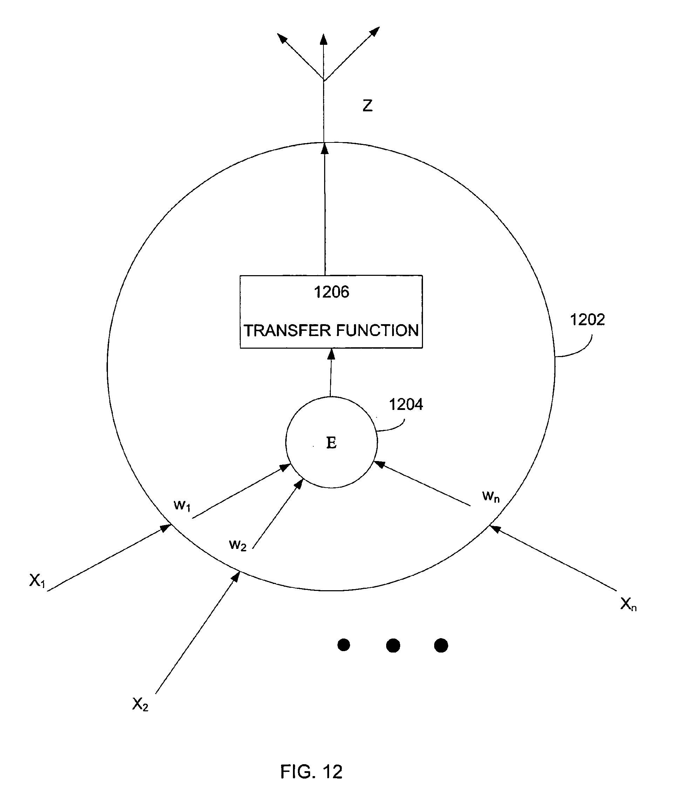

Neural networks comprise a number of interconnected neuron-like processing elements that send data to each other along connections. The strengths of the connections among the processing elements are represented by weights. Referring now to FIG. 12, there is shown a diagram of a single processing element 1202. The processing element receives inputs X₁, X₂, ... Xₙ, either from other processing elements or directly from inputs to the system. It multiplies each of its inputs by a corresponding weight w₁, w₂, ... wₙ and adds the results together to form a weighted sum 1204. It then applies a transfer function 1206 (which is typically non-linear) to the weighted sum, to obtain a value Z known as the state of the element. The state Z is then either passed on to another element along a weighted connection, or provided as an output signal. Collectively, states are used to represent information in the short term, while weights represent long-term information or learning.

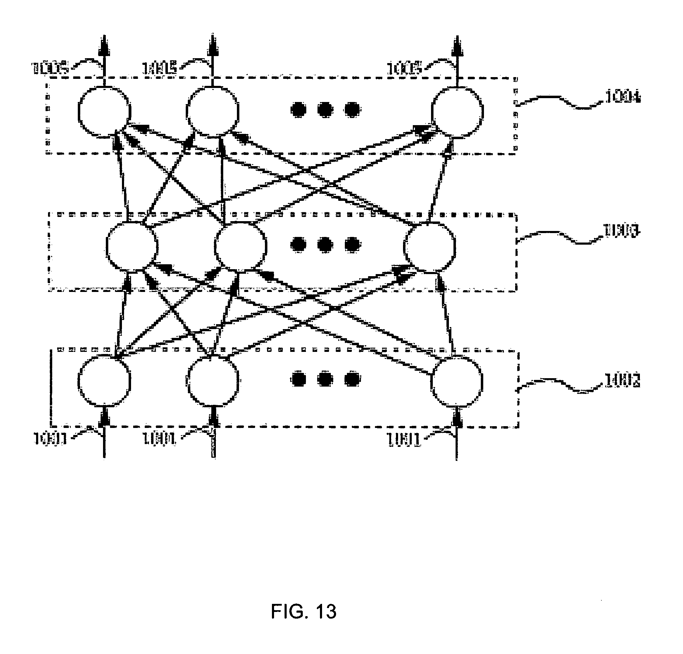

Processing elements in a neural network can be grouped into three categories: input processing elements (those which receive input data values); output processing elements (those which produce output values); and hidden processing elements (all others). The purpose of hidden processing elements is to allow the neural network to build intermediate representations that combine input data in ways that help the model learn the desired mapping with greater accuracy. Referring now to FIG. 13, there is shown a diagram illustrating the concept of hidden processing elements. Inputs 1001 are supplied to a layer of input processing elements 1002. The outputs of the input elements are passed to a layer of hidden elements 1003. Typically there are several such layers of hidden elements. Eventually, hidden elements pass outputs to a layer of output elements 1004, and the output elements produce output values 1005.

Neural networks learn from examples by modifying their weights. The "training" process, the general techniques of which are well known in the art, involves the following steps: 1) Repeatedly presenting examples of a particular input/output task to the neural network model; 2) Comparing the model output and desired output to measure error; and 3) Modifying model weights to reduce the error.

This set of steps is repeated until further iteration fails to decrease the error. Then, the network is said to be "trained." Once training is completed, the network can predict outcomes for new data inputs.

Listed below are preferred exemplary device profiling variables that can be used to create one or more device profiles. Other variables can be used for equally suitable results, depending on which device or devices are profiled, and on the particular type of transaction being executed. Accordingly, those having skill in the art would recognize that the variables listed below are provided as an example only, and not to be used to limit the described embodiments of a fraud detection system and method.
DAILY_DOL_AUTH_CxA_10MIN
DAILY_DOL_AUTH_CxA_1H
DAILY_DOL_AUTH_CxA_1D
DAILY_DOL_AUTH_10MIN
DAILY_DOL_AUTH_1H
DAILY_DOL_AUTH_1D
DAILY_NUM_APPR_AUTH_10MIN
DAILY_NUM_APPR_AUTH_1H
DAILY_NUM_APPR_AUTH_1D
DAILY_NUM_DECLINE_AUTH_10MIN
DAILY_NUM_DECLINE_AUTH_1H
DAILY_NUM_DECLINE_AUTH_1D
DAILY_NUM_HI_DOL_AUTH_10MIN
DAILY_NUM_HI_DOL_AUTH_1H
DAILY_NUM_HI_DOL_AUTH_1D
DAILY_NUM_IS_DEC_REQ_AUTH_10MIN
DAILY_NOM_IS_DEC_REQ_AUTH_1H
DAILY_NOM_IS_DEC_REQ_AUTH_1D
DAILY_NUM_LOW_DOL_AUTH_10MIN
DAILY_NUM_LOW_DOL_AUTH_1H
DAILY_NUM_LOW_DOL_AUTH_1D
DAILY_NUM_NOSUCHACCT_AUTH_10MIN
DAILY_NUM_NOSUCHACCT_AUTH_1H
DAILY_NUM_NOSUCHACCT_AUTH_1D
DAILY_NUM_AUTH_10MIN
DAILY_NUM_AUTH_1H
DAILY_NUM_AUTH_1D
DAILY_NUM_OVER_LIMIT_AUTH_10MIN
DAILY_NUM_OVER_LIMIT_AUTH_1H
DAILY_NUM_OVER_LIMIT_AUTH_1D
DAILY_NUM_OVERPINTRIES_AUTH_10MIN
DAILY_NUM_OVERPINTRIES_AUTH_1H
DAILY_NUM_OVERPINTRIES_AUTH_1D
DAILY_NUM_PIN_DECL_AUTH_10MIN
DAILY_NUM_PIN_DECL_AUTH_1H
DAILY_NUM_PIN_DECL_AUTH_1D
DAILY_NUM_SAME_AMT_AUTH_10MIN
DAILY_NUM_SAME_AMT_AUTH_1H
DAILY_NUM_SAME_AMT_AUTH_1D
DAILY_NUM_SAME_LOC_AUTH_10MIN
DAILY_NUM_SAME_LOC_AUTH_1H
DAILY_NUM_SAME_LOC_AUTH_1D
DAILY_NUM_SUSPECT_FRAUD_AUTH_10MIN
DAILY_NUM_SUSPECT_FRAUD_AUTH_1H
DAILY_NUM_SUSPECT_FRAUD_AUTH_1D
DAILY_NUM_WRONGPIN_AUTH_10MIN
DAILY_NUM_WRONGPIN_AUTH_1H
DAILY_NUM_WRONGPIN_AUTH_1D
PERCENT_CASH
PERCENT_BALINQ
PERCENT_DEPOSIT
PERCENT_DECLINED_ALL
PERCENT_BALINQ_DECL_ALL
PERCENT_CASH_DECL_ALL
PERCENT_CASH_DECL_SUSPECT_FRAUD
PERCENT_CASH_DECL_OVER_WITHDRAW_AMT
PERCENT_CASH_DECL_NO_SUCH_ACCT
PERCENT_CASH_DECL_INCORRECT_PIN
PERCENT_CASH_DECL_OVER_PIN_TRIES
AVG_AMT_ALL
STD_AMT_ALL
AVG_AMT_CASH_ALL
STD_AMT_CASH_ALL
AVG_AMT_CASH_APPROVED
STD_AMT_CASH_APPROVED
AVG_AMT_CASH_DECL_ALL
STD_AMT_CASH_DECL_ALL
AVG_AMT_CASH_DECL_SUSPECT_FRAUD
STD_AMT_CASH_DECL_SUSPECT_FRAUD
AVG_AMT_CASH_DECL_OVER_WITHDRAW
STD_AMT_CASH_DECL_OVER_WITHDRAW
AVG_AMT_CASH_DECL_NO_SUCH_ACCT
STD_AMT_CASH_DECL_NO_SUCH_ACCT
AVG_AMT_CASH_DECL_INCORRECT_PIN
STD_AMT_CASH_DECL_INCORRECT_PIN
AVG_AMT_CASH_DECL_OVER_PIN_TRIES
STD_AMT_CASH_DECL_OVER_PIN_TRIES
DAILY_NUM_IS_SEQ_CI_AUTH_10MIN
DAILY_NUM_IS_SEQ_CI_AUTH_1H
DAILY_NUM_IS_SEQ_CI_AUTH_1D
DAILY_NUM_IS_SEQ_IC_AUTH_10MIN
DAILY_NUM_IS_SEQ_IC_AUTH_1H
DAILY_NUM_IS_SEQ_IC_AUTH_1D
DAILY_NUM_IS_SEQ_II_AUTH_10MIN
DAILY_NUM_IS_SEQ_II_AUTH_1H
DAILY_NUM_IS_SEQ_II_AUTH_1D
DAILY_NUM_IS_SEQ_IJ_AUTH_10MIN
DAILY_NUM_IS_SEQ_IJ_AUTH_1H
DAILY_NUM_IS_SEQ_IJ_AUTH_1D
DAILY_NUM_IS_SEQ_IT_AUTH_10MIN
DAILY_NUM_IS_SEQ_IT_AUTH_1H
DAILY_NUM_IS-SEQ_IT_AUTH_1D
DAILY_NUM_IS_SEQ_JC_AUTH_10MIN
DAILY_NUM_IS_SEQ_JC_AUTH_1H
DAILY_NUM_IS_SEQ_JC_AUTH_1D
DAILY_NUM_IS_SEQ_JI_AUTH_10MIN
DAILY_NUM_IS_SEQ_JI_AUTH_1H
DAILY_NUM_IS_SEQ_JI_AUTH_1D
where
CI: cash withdrawal + balance inquiry
IC: balance inquiry + cash withdrawal
II: two balance inquiries in a row
IJ: balance inquiry + deposit
IT: balance inquiry + balance transfer
JC: deposit + cash withdrawal
JI: deposit + balance inquiry

There are many possible system architectures for using the information inherent in device transaction sequence processing. Each approach has its own advantages. The following sections describe a few such architectures to highlight the range of possible applications.

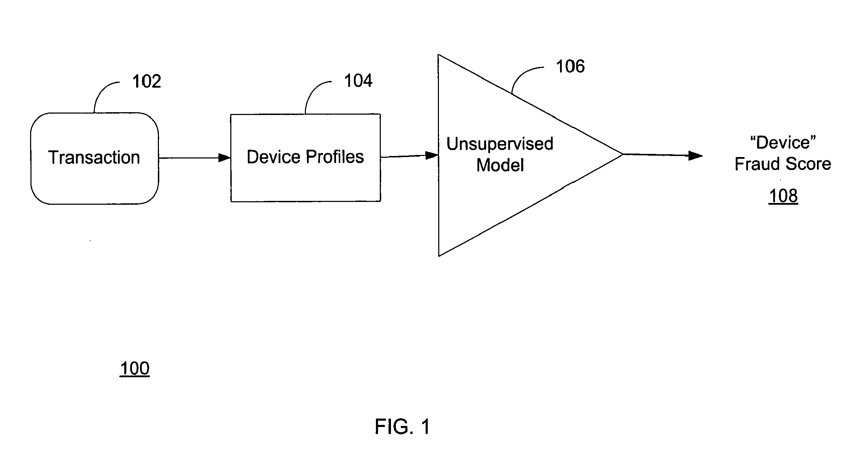

Device profiles, and the execution of device profiling thereby, can be used in various preferred fraud detection systems. FIG. 1 illustrates a device model fraud detection system 100 in which device profiling is used by itself to detect fraud. Data from a transaction 102 that is conducted using a device, such as an ATM or POS device, is compared with and/or processed according to a set of device profile variables to generate devices profiles 104 for the device. The device profiles 104 are then processed according to an unsupervised model 106, which is a scoring model to generate a Device Fraud Score 108 for the device based on the device profiles 104, and without human intervention or input.

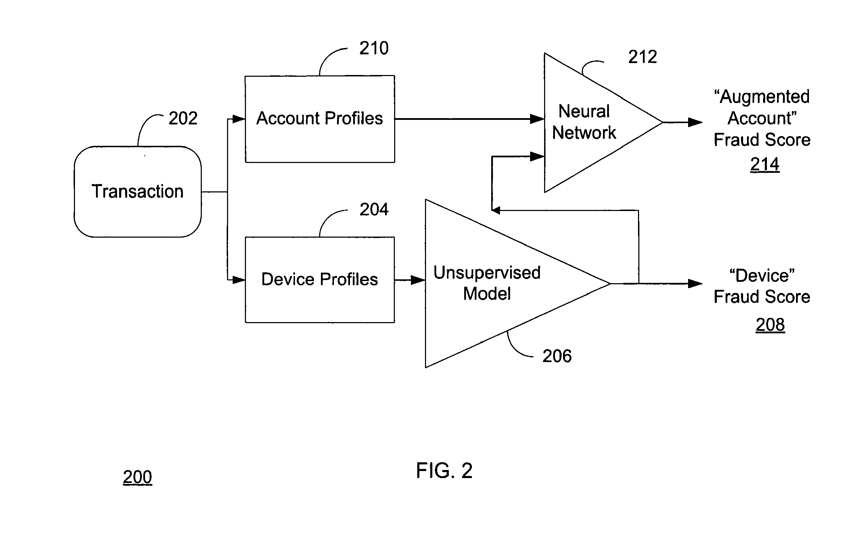

FIG. 2 illustrates an augmented account model fraud detection system 200 in which a device profiling score is added as an additional input to an account profiling model. Data from a transaction 202 that is conducted using a device is compared with and/or processed according to a set of device profile variables to generate devices profiles 204 for the device. The device profiles 204 are then processed according to an unsupervised model 206 to generate, without human intervention or input, a Device Fraud Score 208 for the device based on the device profiles 104. The data from the transaction 202 is also processed according to a set of account profile variables to generate account profiles 210 for the account associated with the transaction 202. The account profiles 210 are then processed by neural network 212, which also receives the Device Fraud Score 208 as a second input. The account profiles 210 and Device Fraud Score 208 are processed by neural network 212 to generate an Augmented Account Fraud Score 214. The Augmented Account Fraud Score 214 uses both account and device information to estimate the probability of fraudulent activity for a given account transaction. This score represents an improvement over an account-only score since unusual activity at a terminal is often related to fraud. This architecture could be used if the device scoring model is upstream of the account model, perhaps provided by an ATM switch network. This architecture supports both device monitoring using the Device Fraud Score 208 and enhanced fraud detection using the Augmented Account Fraud Score 214.

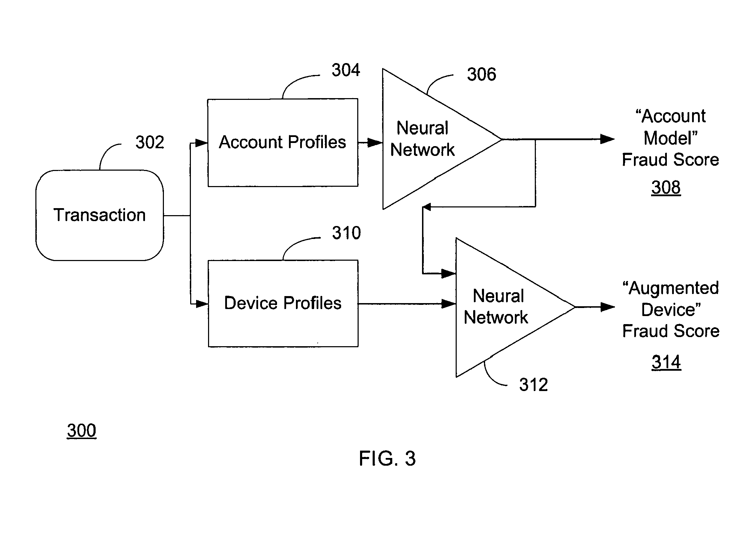

FIG. 3 illustrates an Augmented Device Model fraud detection system 300 in which an account profiling based score is added as an input to a device profiling model. Data from a transaction 302 that is conducted using a device is processed according to a set of account profile variables to generate account profiles 304 for the account associated with the transaction 302. The account profiles 304 are then processed by neural network 306 to generate an Account Model Fraud Score 308. Meanwhile the data from the transaction 302 is compared with and/or processed according to a set of device profile variables to generate devices profiles 310 for the device associated with the transaction 302. The device profiles 310 are processed, with the Account Model Fraud Score 308 as a second input, by neural network 306, which generates an Augmented Device Fraud Score 314. The Augmented Device Fraud score 314 uses both account and device information to estimate the probability of fraudulent activity for a given account transaction. This score represents an improvement over a device-only score since unusual activity on the account complements unusual activity at the terminal. This architecture could be used if the account scoring and device scoring are co-located. This approach will provide the Account Model Fraud Score 308 even if device profiles are not available.

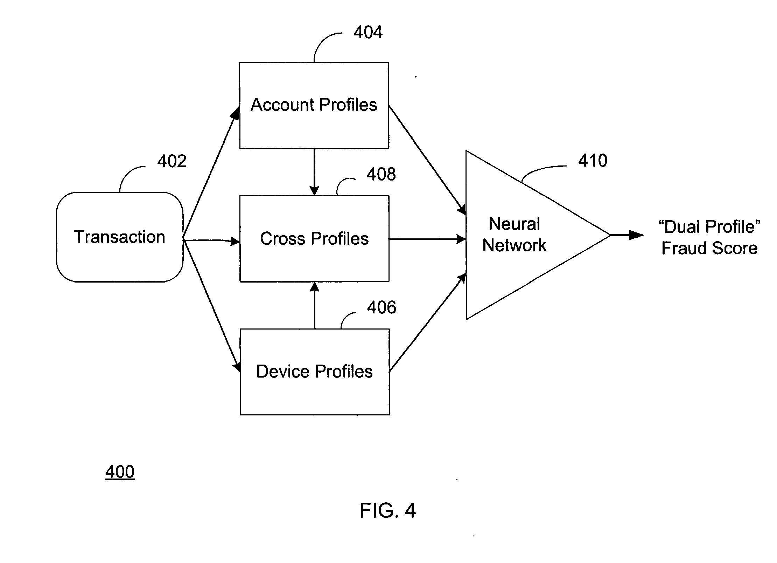

FIG. 4 illustrates a Dual Profile Model fraud detection system 400, in which account profiling variables and device profiling variables are combined to build a dual profile model. Data from a transaction 402, which is associated with both an account and a device on which it occurs, is processed according to a set of account profile variables to generate account profiles 404. The data is also processed according to a set of device profile variables to generate device profiles 406. Some of the data is selectively processed by a set of cross profiles, which are selected as relating to both an account and the device associated with the transaction (i.e. a card with which the transaction was executed), to generate cross profiles 408. The account profiles 404, device profiles 406, and cross profiles 408 are processed by neural network 410 to generate a Dual Profile Fraud Score. The Dual Profile Fraud Score 410 uses both account and device information to estimate the probability of fraudulent activity for a given account transaction. This architecture provides the maximum amount of information for the fraud estimate. The approach maximizes the coupling between account profiling and device profiling.

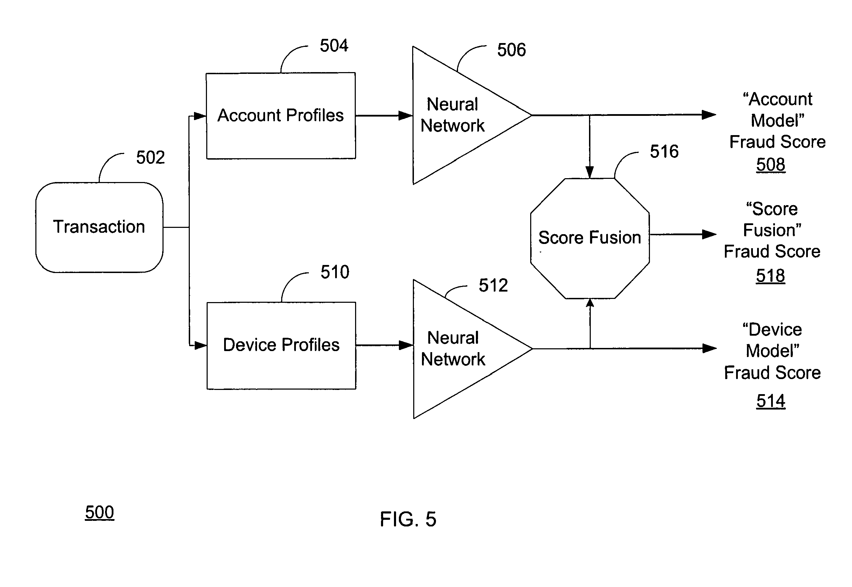

FIG. 5 illustrates a Score Fusion Model fraud detection system 500, in which account and device-based models are cascaded so that the secondary model uses just the Account Profiling and the Device Profiling scores as inputs. Data from a transaction 502 that is conducted using a device is processed according to a set of account profile variables to generate account profiles 504 for the account associated with the transaction 502. The account profiles 504 are then processed by neural network 506 to generate an Account Model Fraud Score 508. Meanwhile, the data from the transaction 502 is compared with and/or processed according to a set of device profile variables to generate devices profiles 510 for the device associated with the transaction 502. The device profiles 510 are processed by neural network 512 which generates a Device Model Fraud Score 514. The Account Model Fraud Score 508 and Device Model Fraud Score 514 are cascaded and processed by a score fusion processor 516 to generate a Score Fusion Fraud Score 518. There are many possible approaches to combining the information available from account profiling and device profiling. The Score Fusion Fraud score 518 uses a tiered approach to estimate the probability of fraudulent activity for a given account transaction. This approach minimizes the coupling between the account profiling and device profiling while still producing an enhanced fraud score.

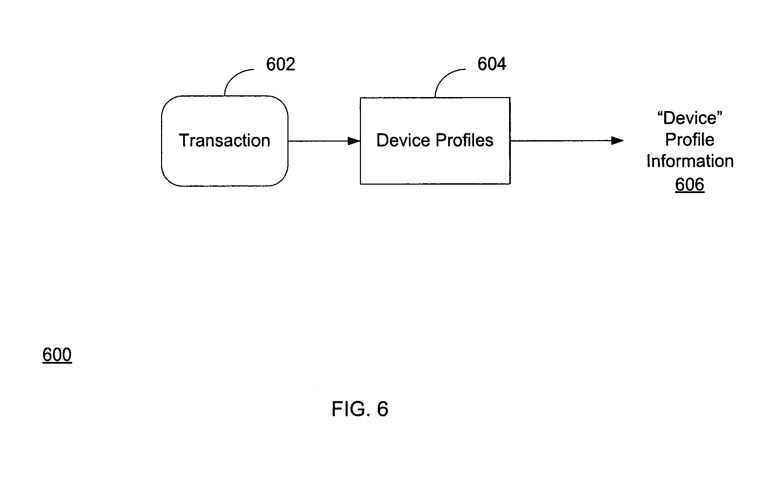

FIG. 6 illustrates an Outlier Model fraud detection system 600. Data from a transaction 602 associated with a device on which the transaction 602 is executed is compared to and/or processed according to a set of device profile variables to generate a set of device profiles 604, which then provides Device Profile Information 606. The generation of Device Profile Information can be useful for device monitoring and for use in outlier models for fraud detection. Outlier models do not rely on previous fraud information for their predictive power. Outlier models compute various characteristics from the transactions as seen by the device and identify unusual ("outlier") features from those characteristics. Since fraud is often associated with unusual activity at a device this device-only approach can be an effective for fraud detection.

In fraud detection applications, the performance of fraud models is typically measured in terms of the account detection rate, or ADR, and the value detection rate, or VDR. ADR is the number of correctly identified fraud accounts expressed as a percentage of all actual fraud accounts. For instance, if there are one hundred fraud accounts, and the model correctly identifies seventy-two of them, then the ADR is 72 percent. VDR is the amount of money saved as the result of a correct fraud prediction, expressed as a percentage of the total amount charged fraudulently against an account. For instance, if a fraudster withdraws $2,000 from an account in several transactions, and the model identifies the account as fraudulent in time to prevent $1,000 of those charges, then the VDR is 50 percent. VDR represents not only whether a model has been used to catch fraud, but how fast that fraud has been caught.

ADR and VDR are closely intertwined with an account false-positive rate, or AFPR. The AFPR expresses the number of accounts identified incorrectly as fraudulent for each actual fraud account the model identifies. For the purpose of model analysis, an account is identified as fraudulent if it has at least one transaction that scores above a "suspect threshold" score, or a model score derived from a fraud detection model, although in practice some systems may combine model scores with rules to generate fraud cases. For instance, a false-positive ratio of 20:1 indicates that for each genuinely fraudulent account that it finds, a model identifies 20 innocent accounts as fraudulent. As one sets a threshold score higher, the false-positive rate goes down. However, by setting a higher threshold, fewer actual frauds are identified.

There are different considerations for selecting an optimal system design for any given application or context. For instance, the "Dual Profile" model has the best performance and is preferred if a single fraud score is adequate. If a device score is desired, to alert operators that there is a high probability that sustained fraud is happening at a particular terminal for example, then the Augmented Account Model might be a better choice. Note that a device model can be supervised or unsupervised.

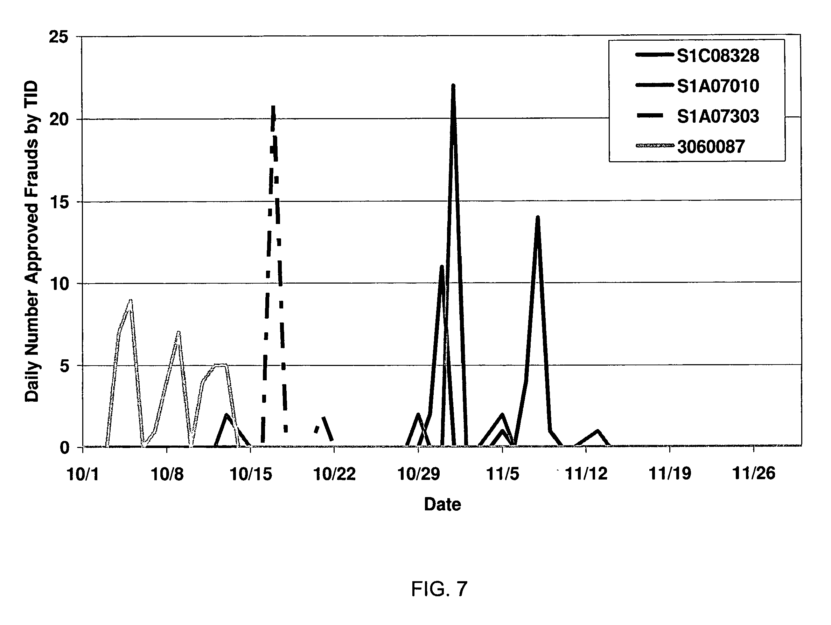

FIG. 7 is a chart that shows a daily number of approved fraud transactions against time at four ATM terminals as exemplary "devices." Note that fraud events are relatively well contained. For terminal 3060087, all fraud occurred in the interval 10/2 - 10/14. The other terminals also show well defined peaks. The reason for the peaks is that fraud transactions often happen in bursts. For this portfolio, approximately 30% of all fraud was determined to be part of a fraud "cluster" or "burst."

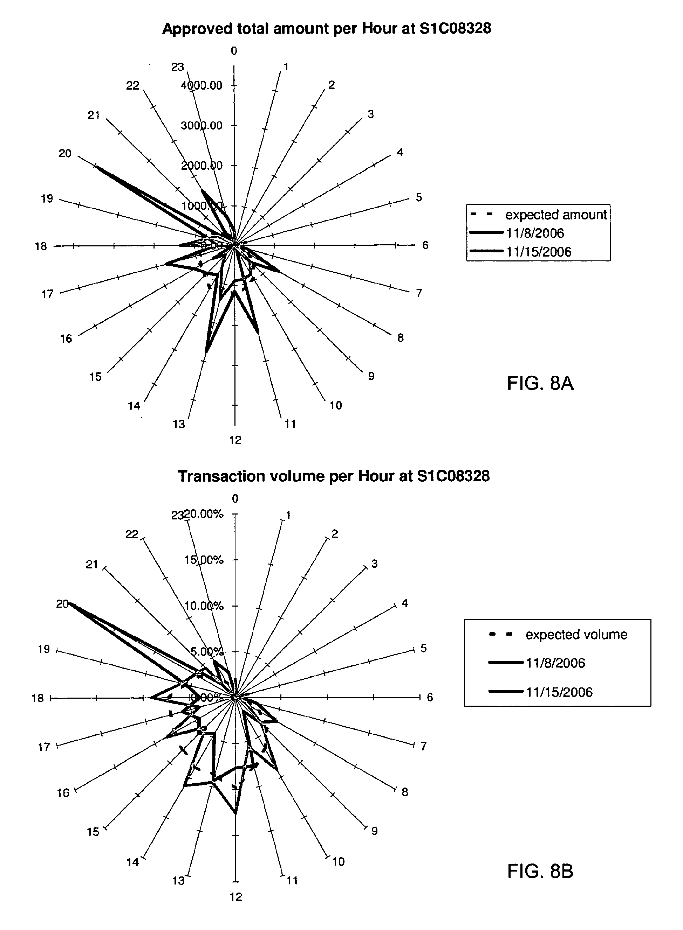

FIGS. 8A and 8B show two radial charts to determine what types of variables can be used in detecting these fraud bursts. FIG. 8A shows a radial chart of approved dollars for terminal S1C08328 by hour for two different days - dollars/hour. The black line is for a day on which a fraud burst occurred. The curve shows a maximum of $4000 was approved during hour 20. They gray line is for a typical day with no fraud burst. The dotted line shows the average dollars/hour approved at this terminal for the entire data set. The peak during hour 20 on 11/8 has a z-value of over 4 indicating an extreme outlier. It follows that variables that track spending rates should help detect burst fraud. FIG. 8B shows a second radial chart illustrating hourly transaction volumes, and indicates that transaction rate variables can be an effective variable for detecting fraud.

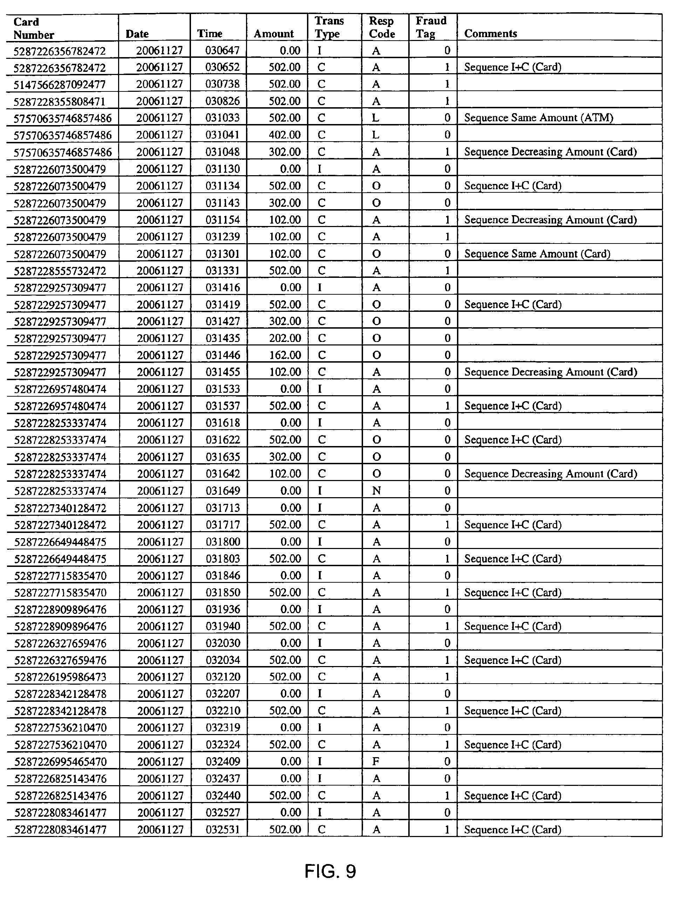

FIG. 9 is a table illustrating results of an exemplary fraud detection process using device profiling. The table illustrates that ATM fraudulent transactions exhibit strong sequence patterns, not only at the card level, but also at the machine level. Thus, device profiling can be dynamically adapted to transactions at the machine level.

The table in FIG. 9 lists a burst of fraudulent transactions at a single ATM (terminal ID = 00041093). These transactions spanned from 03:06:47 through 03:26:18 (around 20 minutes) on 20061127. The fraud tag is marked as 1 (fraud) only for approved losses, but the other transactions for that account were also conducted by the fraudster. In the Trans_Type column, C = cash withdrawal, I = Balance inquiry. For the Resp_Code, A = Approved, the other codes are various types of declines.

This table demonstrates that large amounts can be lost very quickly, and this case is by no means the worst. The Comments column identifies a few patterns and was the motivation for a number of variables in our prototype model. Many of the patterns involve multiple accounts and can only be detected by Device Profiling.

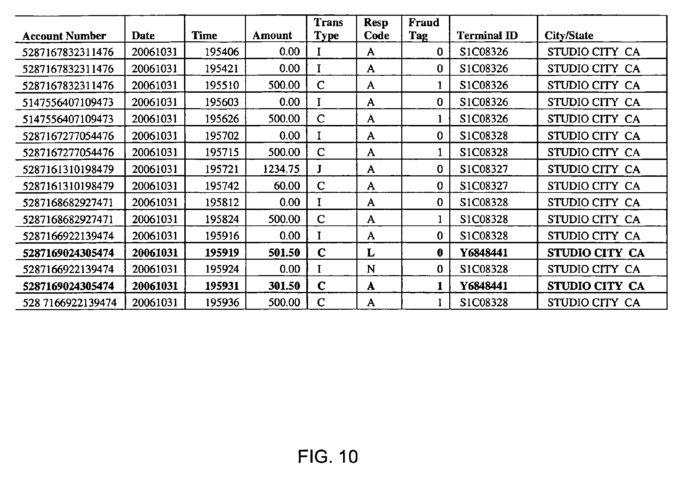

FIG. 10 shows a table of results of an exemplary fraud detection process, to illustrate the value in location profiling. The table lists fraudulent transactions at several ATM terminals co-located in Studio City, California. This event spanned from 19:54:06 to 22:11:26 on 20061031 (lasting 2 hours 16 minutes), and involved ten ATMs. Just the first few minutes of this fraud episode are shown in the table.

These transactions have been sorted by time and show two interesting new features. First, the fraudsters used a deposit (Trans_Type = J) in their fraud scheme. Second, this fraud involved two locations and multiple ATM terminals (see Terminal ID column). The bold rows transacted at one location, the remaining rows at another location, both of which are in Studio City. The use of multiple terminals shows the value in profiling based on location.

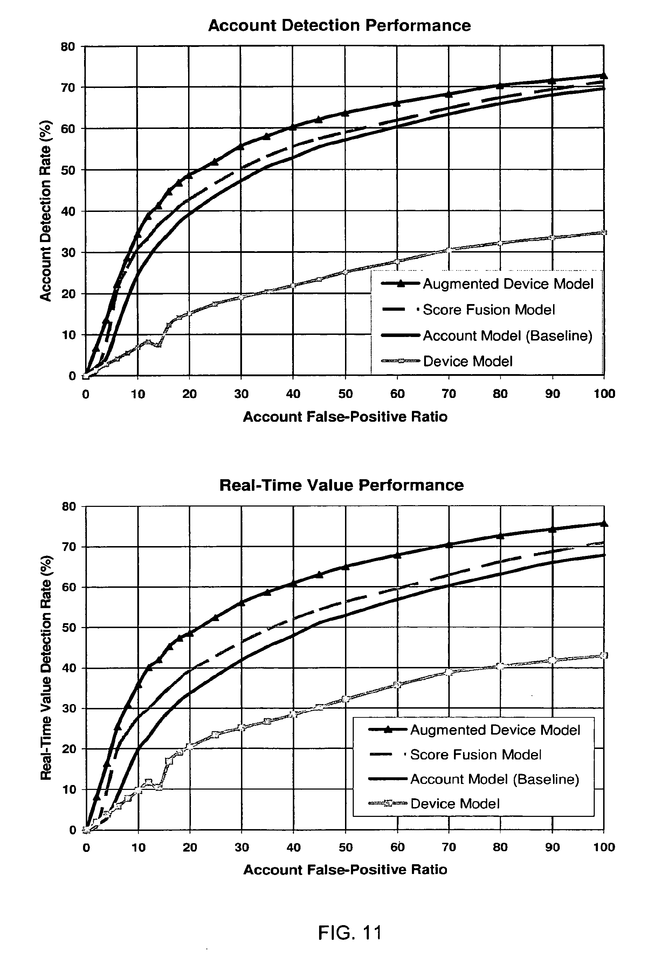

Results show a 15% absolute (40% relative) improvement in Account Detection Rate (ADR) at a 20:1 Account False Positive Ration (AFPR) when Device Profiling is added to Account Profiling, as illustrated in FIG. 11.

Embodiments of the invention and all of the functional operations described in this specification can be implemented in digital electronic circuitry, or in computer software, firmware, or hardware, including the structures disclosed in this specification and their structural equivalents, or in combinations of them. Embodiments of the invention can be implemented as one or more computer program products, i.e., one or more modules of computer program instructions encoded on a computer readable medium, e.g., a machine readable storage device, a machine readable storage medium, a memory device, or a machine-readable propagated signal, for execution by, or to control the operation of, data processing apparatus.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of them. A propagated signal is an artificially generated signal, e.g., a machine-generated electrical, optical, or electromagnetic signal, that is generated to encode information for transmission to suitable receiver apparatus.

A computer program (also referred to as a program, software, an application, a software application, a script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for executing instructions and one or more memory devices for storing instructions and data. Generally, a computer will also include, or be operatively coupled to, a communication interface to receive data from or transfer data to, or both, one or more mass storage devices for storing data, e.g., magnetic, magneto optical disks, or optical disks.

Moreover, a computer can be embedded in another device, e.g., a mobile telephone, a personal digital assistant (PDA), a mobile audio player, a Global Positioning System (GPS) receiver, to name just a few. Information carriers suitable for embodying computer program instructions and data include all forms of non volatile memory, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Certain features which, for clarity, are described in this specification in the context of separate embodiments, may also be provided in combination in a single embodiment. Conversely, various features which, for brevity, are described in the context of a single embodiment, may also be provided in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Particular embodiments of the invention have been described. Other embodiments are within the scope of the following claims. For example, the steps recited in the claims can be performed in a different order and still achieve desirable results. In addition, embodiments of the invention are not limited to database architectures that are relational; for example, the invention can be implemented to provide indexing and archiving methods and systems for databases built on models other than the relational model, e.g., navigational databases or object oriented databases, and for databases having records with complex attribute structures, e.g., object oriented programming objects or markup language documents. The processes described may be implemented by applications specifically performing archiving and retrieval functions or embedded within other applications.

## Claims

**1.** A computer-implemented fraud detection method comprising:
monitoring past customer account transactions conducted with a selected one or more transaction devices;
generating a predictive model that combines customer account transaction profiles with transaction device profiles related to the one or more transaction devices; and
storing a representation of the predictive model in a storage.

**2.** A method in accordance with claim 1, further comprising:
receiving data representing at least one current customer account transaction being conducted with the selected one or more transaction devices; and
processing the data representing at least one current customer account transaction with the predictive model to generate a signal indicative of the likelihood of fraud in the at least one current customer account transaction.

**3.** A method in accordance with claim 2, wherein the signal indicative of the likelihood of fraud includes a score for the at least one current customer account transaction based on the predictive model.

**4.** A method in accordance with any of claims 1-3, wherein the selected one or more transaction devices include at least one automated teller machine or point of sale terminal.

**5.** A method in accordance with any of claims 1-3, wherein the selected one or more transaction devices include a group of automated teller machines or group of point of sale terminals within a predefined geographic location.

**6.** A method in accordance with any of claims 1-5, wherein generating a predictive model that combines customer account transaction profiles with transaction device profiles related to the one or more transaction devices further includes:
processing data associated with the past customer account transactions according to a set of transaction device profile variables to generate a set of transaction device profiles for each of the one or more transaction devices.

**7.** A method in accordance with claim 6, wherein the transaction device profile variables include baseline transaction steps that are executable with each of the one or more transaction devices.

**8.** A method for detecting fraud in financial transactions, the method comprising:
receiving, through a communications network, customer account transaction data obtained at a transaction device; and
generating predictive fraudulent activity information based on the customer account transaction data obtained at the transaction device according to one or more transaction device profile variables that define a transaction device profile for the transaction device.

**9.** A method in accordance with claim 8, wherein the transaction device comprises an automated teller machine or a point of sale terminal.

**10.** A method in accordance with any of claims 8-9, wherein generating predictive fraudulent activity information further includes:
processing data associated with past customer account transactions according to a set of transaction device profile variables to generate a set of transaction device profiles for transaction device.

**11.** A method in accordance with claim 10, wherein the transaction device profile variables include baseline transaction steps that are executable with the transaction device.

**13.** A system for detecting fraud in financial transactions, the system comprising:
a monitor adapted to transmit, through a communications network to a fraud detection computer, customer account transaction data obtained at a transaction terminal according to one or more transaction device variables of a transaction device profile.

**14.** A system for detecting fraud in financial transaction, the system comprising:
a fraud detection computer that receives, through a communications network, customer account transaction data obtained by a monitoring device of a transaction device according to one or more transaction device variables of a transaction device profile.

**15.** A fraud detection system comprising:
a transaction monitor for monitoring a transaction at a transaction device, and for transmitting data associated with the transaction to a communication network; and
a fraud detection computer that receives, through the communications network, the data associated with the transaction, and parses the data for transaction device profile variable data for processing according to a set of transaction device profiles, the fraud detection computer further configured to generate a device fraud score.
